# EUROPEAN PATENT SPECIFICATION

(11) **EP 3 516 192 B1**
(45) Date of publication and mention of the grant of the patent: **15.09.2021**
(21) Application number: 17767843.0
(22) Date of filing: 15.09.2017
(51) Int. Cl.: F02D 19/06, F02D 19/10

(54) **DUAL FUEL INJECTOR**
DUAL-KRAFTSTOFFEINSPRITZVENTIL
INJECTEUR BICARBURANT

(30) Priority: 21.09.2016 GB 201616066
(43) Date of publication of application: 31.07.2019
(73) Proprietor: Delphi Technologies IP Limited, St. Michael (BB)
(72) Inventor: STANBRIDGE, Joseph, Bristol BS3 1DT (GB); MEEK, George, A, Aylburton Gloucestershire GL15 6BZ (GB)
(74) Representative: Allain, Michel Jean Camille
(86) International application number: PCT/EP2017/073335
(87) International publication number: WO 2018/054786

(56) References cited:
- WO-A1-2014/186891
- WO-A1-2016/058825
- DE-A1-102014 015 111
- US-A1- 2014 331 964
- US-A1- 2016 108 874
- US-B2- 9 212 639

## Description

### TECHNICAL FIELD

The present invention relates to dual-fuel equipment and more particularly to dual-fuel injector and the structure of said injector enabling to inject diesel fuel and compressed natural gas within the same injector.

### BACKGROUND OF THE INVENTION

Internal combustion engines operating on two different fuels are generally provided with two distinct fuel equipment comprising two injectors each injecting one fuel in the same piston.

Creating a single injector adapted to inject two fuels raises major problems for instance of internal leaks risking to mixing said fuels. Actually, truck engines that are historically diesel engines are developing to run on diesel fuel and compressed natural gas (GNG). The pressure of both diesel and CNG ranges up to 500 bars and it is intended to raise this level.

In said truck engines, the main injection event during the combustion cycle is performed with CNG which requires large quantities, this event generates pressure waves that internally propagate with very little damping.

Also, on known CNG injectors operating in a smaller range of pressure, the CNG enters the injector via an inlet where sealing is provided by O-rings arranged between male and female pipes. This specific behaviour of CNG associated to the raising pressure creates leaks through said O-ring classical connections. US2016108874 discloses a dual fuel injector.

### SUMMARY OF THE INVENTION

The invention relates to a dual fuel injector according to independent claim 1.

Accordingly, it is an object of the present invention to resolve the above mentioned problems in providing a dual-fuel injector adapted to be arranged in a dual-fuel injection equipment of an internal combustion engine. Said dual-fuel injector generally extends along a main axis, from a top-head to a nozzle-tip and it internally accommodates a first circuit for conveying a first fuel from a first inlet to a first set of injection holes provided in the nozzle tip and, a second circuit for conveying a second fuel from a second inlet to a second set of injection holes provided in the nozzle tip. The dual-fuel injector further comprises
- a first control-valve arranged to control the pressure of the first fuel in a first control chamber thus forcing the opening, or closing, of a first valve member enabling, or forbidding, injection of the first fuel via the first set of injection holes and,
- a second control-valve arranged to control the pressure of the first fuel in a second control chamber thus forcing the opening, or closing, of a second valve member enabling, or forbidding, injection of the second fuel via the second set of injection holes.

The dual-fuel injector further comprises a first inlet body arranged in the head of the injector and axially extending from an upper face to a transverse under face, and being provided with the first inlet, the under face of the first inlet body being in surface contact against the second control valve.

The dual-fuel injector further comprises a second inlet body axially extending from a transverse upper face to an opposed transverse under face, the first control valve being arranged in a recess provided in said upper face of the second inlet body.

Also, the dual-fuel injector further comprises a first capnut bearing on a shoulder face of the first inlet body and being firmly tightened on the second inlet body, thus fixing in axial co-alignment the two control valve compressed between the two inlet bodies.

Also, the dual-fuel injector is further provided with a barrel member and a nozzle assembly, the upper face of the barrel member being in surface contact against the under face of the second inlet body and, the under face of said barrel member being in surface contact against the upper face of the nozzle assembly and wherein, the second control chamber is defined in said barrel member.

Also, the first and second valve members, are axially guided in the nozzle assembly and, the first control chamber is defined in said nozzle assembly.

Also, the dual-fuel injector further comprises a second capnut bearing on a shoulder face of the nozzle assembly and being firmly tightened on the second inlet body thus Fixing in axial co-alignment the barrel member compressed between the nozzle assembly and the second inlet body.

The first circuit provided for conveying the first fuel comprises
- a first high pressure line extending from the first inlet to the first set of holes,
- a first branch extending from said first high pressure line to the first control chamber and,
- a second branch extending from said first high pressure line to the second control chamber and wherein,
said first circuit further comprises
- a first return line extending from the first control chamber toward an outlet, said first return line being controlled by the first control-valve and,
- a second return line extending from the second control chamber toward the outlet, said second return line being controlled by the second control-valve.

The second circuit solely comprises a second high pressure line for conveying the second fuel from the second inlet to the second set of holes.

The first fuel is a diesel fuel and the second fuel is compressed natural gas (CNG).

The second high pressure line comprises several parallel channels merging in a common gallery arranged in the vicinity to the nozzle tip, said second high pressure line having an overall volume comprised between 10cm³ and 18cm³.

The first inlet opens in a metallic part and it defines a first female face adapted to receive a complementary male face of a high pressure pipe forming a first metal-to-metal seal when tightened against each other.

The second inlet opens in a metallic part and it defines a female face adapted to receive a complementary male face of a high pressure pipe forming a second metal-to-metal seal when tightened against each other.

The invention further extends to a dual-fuel injection equipment comprising at least one dual-fuel injector as previously mentioned.

### BRIEF DESCRIPTION OF THE DRAWINGS

The present invention is now described by way of example with reference to the accompanying drawings in which:
Figure 1 is a 3D view of an internal combustion engine operating on two different fuels conveyed by an injection equipment provided with dual-fuel injectors as per the invention.
Figure 2 is a 3D representation of the dual-fuel injector represented on figure 1.
Figure 3 is an axial section of the dual-fuel injector represented on figure 1 and figure 2.
Figure 4 is a transparent representation of the dual-fuel injector of figures 2 and 3, said view enabling to visualize a fuel line for a second fuel.

### DESCRIPTION OF THE PREFERRED EMBODIMENTS

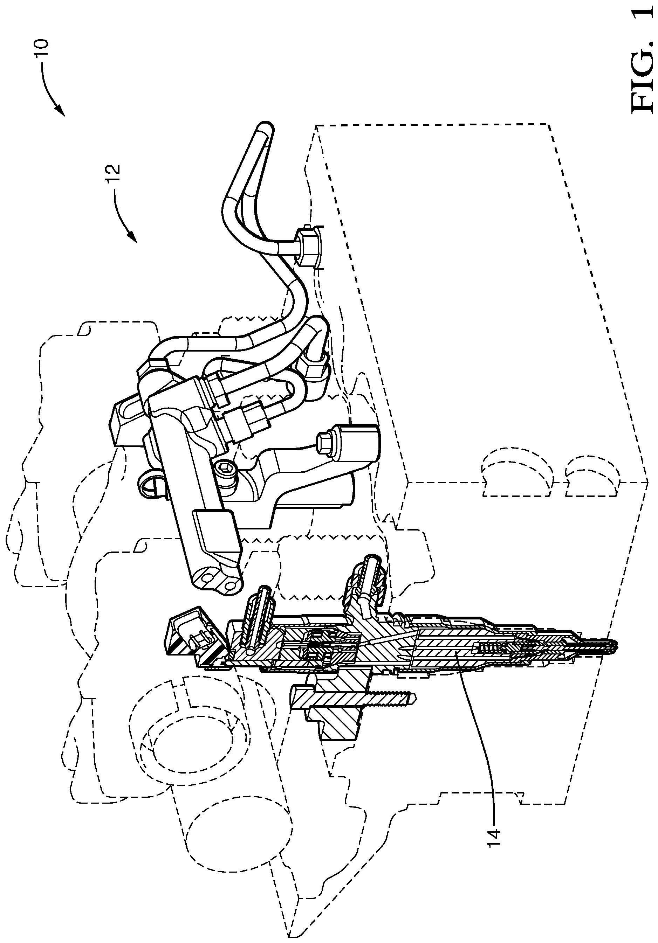

In reference to figure 1 is described a dual-fuel internal combustion engine 10 sketched in phantom lines and provided with a dual-fuel injection equipment 12 adapted to inject diesel fuel, hereafter diesel or first fuel F1, and compressed natural gas, hereafter CNG or second fuel F2 that are both pressurised to about 500 bars.

The dual-fuel injection equipment 12 comprises a pump, several pipes and a dual-fuel common-rail, or manifold, the diesel first fuel F1 and the CNG second fuel F2 being segregated from each other, both fuels being delivered to the same dual-fuel injectors 14 provided with separate first inlet 16 for the first fuel F1 and, second inlet 18 for the second fuel F2, said fuels being alternatively sprayed, via separate sets of spray holes, in the piston. On figure 1 only one injector 14 is represented in axial section although it is known that several injectors equip a multi-piston engine such as a truck engine.

Also, the injector 14 comprises different members stacked on the top of each other and, said lengthy arrangement enables to arrange the injector 14 in a deep well provided in the engine block still having the first 16 and second 18 inlets outside the well, this facilitating the connections of pipes of the fuel equipment.

An injection event is a sequence of individual events happening around the top dead centre (TDC) position of a piston, said sequence comprising one or several pilot-injection, or pre-injection, one main injection followed by one or several post-injection events. During the pre- and the post-injections a small quantity of first fuel F1 is sprayed in the piston of the engine and, during the main injection a large quantity of second fuel F2 is sprayed in said piston.

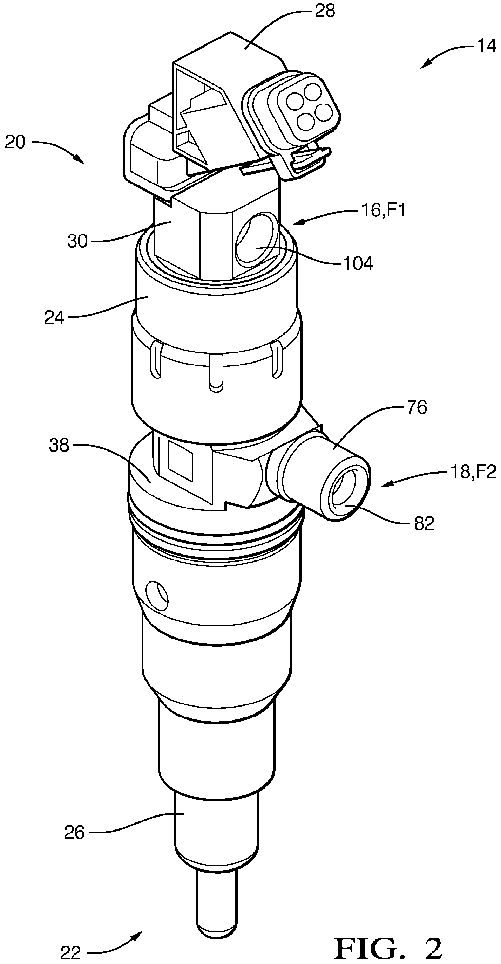

More in details in reference to the figures 2 to 4, the dual-fuel injector 14 has an elongated shape extending along a main axis X from a head 20 to a nozzle tip 22 and, in-between, the injector 14 comprises several members stacked on the top of each other and firmly maintained together by a first capnut 24 and a second capnut 26.

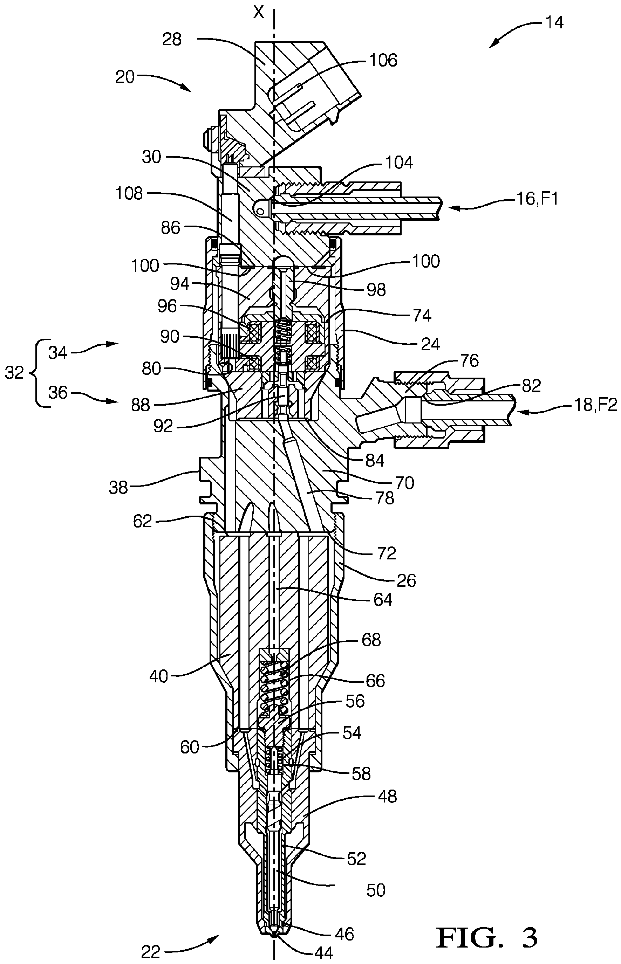

From top to bottom, following the arbitrary orientation of figure 3, the injector 14 comprises an electrical connector 28 arranged on the top of a first inlet body 30, wherein is defined the first inlet 16, then a double control valve assembly 32 comprising a second control valve 34 and below it, a first control valve 36 arranged against a second inlet body 38, wherein is defined the second inlet 18, then follows a barrel member 40 and a nozzle assembly 42 at the tip of which are arranged the injection holes.

A part of the connector 28 that is usually moulded in plastic material, the other members of the injector 14 are all metallic.

The first capnut 24 bears on a shoulder face provided on the outer face of the first inlet body 30 and, it is screwed to the second inlet body 38, the double control valve assembly 32 being compressed in-between. The second capnut 26 bears on a shoulder face of the outer face of the nozzle assembly 42 and, it is also firmly screwed on the second inlet body 38 that is provided on its outer face with two male threads, the barrel member 40 being compressed between said body 38 and nozzle 42.

The injector 14 further accommodates a first circuit C1 for conveying the first fuel F1 from the first inlet 16 to the nozzle tip 22 where said first fuel F1 is sprayed via a first set of holes 44 and also, a second circuit C2 for conveying the second fuel F2 from the second inlet 18 to the nozzle tip 22 where said second fuel F2 is sprayed via a second set of holes 46.

Precisely, the nozzle assembly 42 comprises a nozzle body 48 extending from an upper transverse face to the tip where are sprayed the fuels, said body 48 having a peripheral wall surrounding an inner space in which a double valve member is axially guided. Said double valve member comprises of a first valve member 50 concentrically guided in a bore provided inside a second valve member 52. The second valve member 52 is a hollow needle adapted to open or close the second set of holes 46 arranged through the bottom end of the peripheral wall of the body 48 and, the first valve member 50 is a plain needle, or inner needle, adapted to open or close the first set of holes 44 arranged through the bottom of said hollow needle 52.

A plug 56 arranged at the end of the hollow needle 52 distant from the injection holes seals the bore enclosing the inner needle 50 and defining a first control chamber 58 between the top end of the inner needle 50 and said sealing plug 56. A first spring 54, compressed in said first control chamber 58 between the plug 56 and the inner needle 50, biases said needle 50 is in a closed position of the first holes 44.

In the nozzle assembly 42, the first fuel circuit C1 divides forming a first fuel injection path extending in the bore of the hollow needle 52 around the inner needle 50 leading to the first set of holes 44 and, a first control path leading to the first control chamber 58, the inner needle 50 lifting to open the first holes 44 when the pressure of the first fuel F1 in said first control chamber 58 drops below a first threshold.

The barrel member 40, arranged above the nozzle assembly 42, extends from an under face 60 pressed in surface contact against the upper transverse face of the nozzle body to, an upper transverse face 62 and, said barrel member 40 is provided with portions of the first fuel circuit C1, portions of the second fuel circuit C2, and also with a conduit forming a second control path 64 axially X extending from the centre of said upper face 62 to the centre of said under face 60 where said second control path 64 opens in the top face of a cylindrical recess defining a second control chamber 66 arranged right above the second valve member 52, the plug 56 in fact partially protruding in said second control chamber 66.

A second spring 68 compressed inside said second control chamber 66 between said top face and the upper face of the plug 56 biases the second valve member 52 is in a closed position of the second holes 46.

The first fuel F1 flows in said second control path 64 and fills the second control chamber 66 and, when the pressure of the first fuel F1 in said second control chamber drops below a second threshold the hollow needle 52 lifts-up and opens the second set of holes 46.

The second inlet body 38, arranged above the barrel member 40, has a main cylindrical member 70 from which extends an integral radial extension 76 wherein is defined the second inlet 18. The main member 70 axially extends from a transverse under face 72 pressed in surface contact against the upper face 62 of the barrel member to an upper transverse face 74.

The second inlet body 38 accommodates other portions of the first circuit C1 downwardly conveying the first fuel F1 toward the nozzle assembly 42 and also, a section of a first return channel 78 enabling the first fuel F1 enclosed in the first control chamber 58 to exit and return toward a first fuel outlet, not represented.

Also, portions of the second fuel circuit C2 are provided in the second inlet body 38 wherein they extend toward the second inlet 18 that defines, in said radial extension 76, a cylindrical channel ending in an enlarging female conical face 82. The extension is externally threaded and adapted to receive a complementary nut which, when tightened over the radial extension 76 forces the end face of a pipe, in which is conveyed the CNG, in metal-to-metal sealing contact against said female conical face 82 of the second inlet.

This metal-to-metal sealing arrangement has proven to be an efficient sealing arrangement new to CNG use, and more generally to any compressed gas. Said arrangement can be implemented to gas, or CNG, injectors provided with a single inlet.

In its upper end, the main member 70 of the second inlet body is provided with a recess 80 opening in the upper face 74, thus limiting said upper face 74 to an annular edge surrounding said recess 80. In said recess is arranged the first control valve 36 and, right above the second control valve 34.

The double control valve assembly 32 comprising the first 36 and the second 34 control valves extends from an under face 84 of the first control valve to an upper face 86 of the second control valve. The first control valve 36 has a first body 88 defining said under face 84 of the assembly, body 88 in which is fixed a first solenoid 90 that cooperates with a first armature-and-spool assembly 92 axially guided in a hydraulic bore and armature chamber provided in said first body 88. The second control valve 34 arranged atop the first control valve 36 has a second body 94 defining said upper face 86 of the assembly, body 94 in which is fixed a second solenoid 96 that cooperates with a second armature-and-spool assembly 98 axially guided
in another hydraulic bore and armature chamber arranged in said second body 94. As it is visible on the figure, the two control valve are arranged so the armature-and-spool assemblies are aligned and adapted to slide in opposite directions.

The first inlet body 30 is a cylindrical member having an under face 100 pressed in surface contact against the upper face 86 of the second control valve and an upper face 102 that is an external face of the injector 14. The first fuel circuit C1 extends in said first inlet body 30 where it joins the first inlet 16 that extends radially in said body 30. The first inlet 16 is defined by another female conical face 104 that enlarges the extremity of the first fuel channel C1, said female conical face 104 joining a larger cylindrical threaded bore adapted to receive a complementary nut which forces the end face of a pipe, in which is conveyed the pressurised diesel F1, in metal-to-metal sealing contact against said female conical face 104 of the first inlet 16.

The electrical connector 28, shaped to receive a complementary connector of a command unit not represented, is fixed atop the first inlet body 30 and it comprises electrical pins 106 from which extends electrical leads 108 arranged in a specific bore provided in the first inlet body and in the two control valves bodies, the end of said leads 108 being connected to the first 90 and the second 96 solenoids.

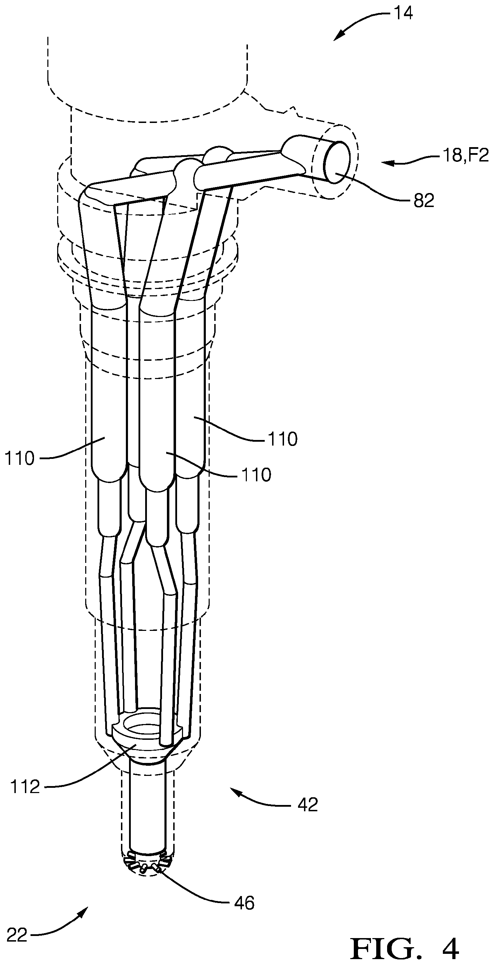

More in detail in reference to figure 4, the second fuel circuit C2 conveying, in use, CNG from the second inlet 18 to the second sets of holes 46, extends from the second inlet 18 in a single short portion that rapidly divides to form four channel 110 which, after a short radial portion arranged in the second inlet body 38 reorient and downwardly extend through the second inlet body and the barrel member prior to enter the nozzle body 48, wherein said four parallel channels 110 merge in a large gallery 112 formed within the inner space of the nozzle body. Alternatively, four channels are represented while in another embodiment, said channels 110 could be three, five, or any other number depending on the available space wherein it is possible to arrange them. Also, the large internal accumulator volume is not just restricted to the design with cylindrical channels 110. In an alternative not represented, channels 110 could also be replaced with a single continuous column contained within the injector such as within capnut 20 surrounding other members.

Moreover, as it is visible said four channels 110 occupy as much space as possible, the upper portions of the channels 110 in the second inlet body 38 and in the barrel member 40 having a large cross-section. In the injector 14 presented, which is designed for a truck engine, it has been possible to arrange an overall volume of 13 cm³ for the second fuel circuit C2. In other embodiments of injectors, a second fuel circuit C2 having a volume capacity between 12 and 18 cm³ is possible. This large inner space within the nozzle body enables that an important volume of CNG to be ready to inject, accumulated very close to the injection holes 46.

The operation of the injector 14 is now partially summarised.

Initially, none of the solenoid 90, 96 is energised, the armature-and-spool assemblies 92, 98 a biased away from their respective solenoid closing return channels and preventing first fuel F1 to exit the first 58 and the second 66 control chambers. Consequently, the first fuel pressure rises in both control chambers exerting forces onto both valve members 50, 52 that close both sets of holes 44, 46 forbidding any fuel injection.

In the subsequent pilot steps, the command unit energises only the first solenoid 90 generating a magnetic field that attracts the first armature-and-spool assembly 92 which displaces and opens the first return channel enabling the first fuel F1 to exit the first control chamber 58. The pressure in said first control chamber drops allowing the needle 50 to lift and open the first set of holes 44, therefore injecting diesel F1 into the piston. This pilot step is short since the quantity injected is small during the pilot injection. This sequence of events is similar in the case of a post-injection events.

In the subsequent main injection step, the first solenoid 90 is no longer energised thus the first sets of holes 44 are closed and no diesel is injected and, the second solenoid 96 is energised attracting the second armature-and-spool assembly 98 and releasing the first fuel F1 confined in the second control chamber 66. The pressure in said second control chamber 66 drops enabling the second valve member 52 to lift-up and open the second set of holes 46 through which the CNG F2 is sprayed into the piston. This main injection step is quite long since a significant quantity of CNG is injected from the gallery 112. Also, during these steps, the hollow needle opens and closes and, the inertia within the system means that pressure waves are generated and propagate inside the second fuel F2. Said pressure waves are damped within the second circuit C2 due to the large volumes contained in channels 110.

### LIST OF REFERENCES

- X: main axis
- F1: first fuel - diesel
- F2: second fuel - CNG
- C1: first circuit
- C2: second circuit

- 10: engine
- 12: dual-fuel injection equipment
- 14: dual-fuel injector
- 16: first inlet
- 18: second inlet
- 20: head of the injector
- 22: nozzle tip
- 24: first capnut
- 26: second capnut
- 28: connector
- 30: first inlet body
- 32: double control valve assembly
- 34: second control valve
- 36: first control valve
- 38: second inlet body
- 40: barrel member
- 42: nozzle assembly
- 44: first set of holes
- 46: second set of holes
- 48: nozzle body
- 50: first valve member - needle
- 52: second valve member - hollow needle
- 54: first spring
- 56: plug
- 58: first control chamber
- 60: under face of the barrel member
- 62: upper face of the barrel member
- 64: second control path
- 66: second control chamber
- 68: second spring
- 70: main member of the second inlet body
- 72: under face of the second inlet body
- 74: upper face of the second inlet body
- 76: radial extension
- 78: first return channel
- 80: recess
- 82: female conical face of the second inlet
- 84: under face of the first control valve
- 86: upper face of the second control valve
- 88: first body of the first control valve
- 90: first solenoid
- 92: first armature-and-spool assembly
- 94: second body of the first control valve
- 96: second solenoid
- 98: second armature-and-spool assembly
- 100: under face of the first inlet body
- 102: upper face of the first inlet body
- 104: female conical face of the first inlet
- 106: electrical pins
- 108: electrical leads
- 110: parallel channels of the second fuel circuit
- 112: gallery

## Claims

1. Dual-fuel injector (14) adapted to be arranged in a dual-fuel injection equipment (12) of an internal combustion engine (10), said dual-fuel injector (14) generally extending along a main axis (X), from a top-head (20) to a nozzle-tip (22), and internally accommodating a first circuit (C1) for conveying a first fuel (F1) from a first inlet (16) to a first set of injection holes (44) provided in the nozzle tip (22) and, a second circuit (C2) for conveying a second fuel (F2) from a second inlet (18) to a second set of injection holes (46) provided in the nozzle tip (22), the dual-fuel injector (14) further comprising,
- a first control-valve (36) arranged to control the pressure of the first fuel (F1) in a first control chamber (58) thus forcing the opening, or closing, of a first valve member (50) enabling, or forbidding, injection of the first fuel (F1) via the first set of injection holes (44) and,
- a second control-valve (34) arranged to control the pressure of the first fuel (F1) in a second control chamber (66) thus forcing the opening, or closing, of a second valve member (52) enabling, or forbidding, injection of the second fuel (F2) via the second set of injection holes (46), the first valve member (50) being concentrically guided in a bore provided inside the second valve member (52) and wherein,
the injector (14) further comprises :
a first inlet body (30) arranged in the head of the injector and axially (X) extending from an upper face (102) to a transverse under face (100), and being provided with the first inlet (16), the under face of the first inlet body being in surface contact against the second control valve and,
a second inlet body (38) axially (X) extending from a transverse upper face (74) to an opposed transverse under face (72), the first control valve being arranged in a recess (80) provided in said upper face (74) of the second inlet body and,
a first capnut (24) bearing on a shoulder face of the first inlet body (30) and being firmly tightened on the second inlet body (38), thus fixing in axial co-alignment the two control valve compressed between the two inlet bodies and,
a barrel member (40) and a nozzle assembly (42), the upper face (62) of the barrel member (40) being in surface contact against the under face (72) of the second inlet body and, the under face (60) of said barrel member (40) being in surface contact against the upper face of the nozzle assembly (42) and wherein, the second control chamber (66) is defined in said barrel member (40).

2. Dual-fuel injector (14) as claimed in claim 1 wherein the first and second valve members (50, 52) are axially guided in the nozzle assembly (42) and, the first control chamber (58) is defined in said nozzle assembly (42).

3. Dual-fuel injector (14) as claimed in any one of the claims 1 or 2 further comprising a second capnut (26) bearing on a shoulder face of the nozzle assembly (42) and being firmly tightened on the second inlet body (38) thus fixing in axial co-alignment the barrel member (40) compressed between the nozzle assembly (42) and the second inlet body (38).

4. Dual-fuel injector (14) as claimed in any one of the preceding claims wherein the first circuit (C1) provided for conveying the first fuel (F1) comprises:
- a first high pressure line extending from the first inlet (16) to the first set of holes (44),
- a first branch extending from said first high pressure line to the first control chamber (58) and,
- a second branch extending from said first high pressure line to the second control chamber (66) and wherein,
said first circuit (C1) further comprises:
- a first return line extending from the first control chamber (58) toward an outlet, said first return line being controlled by the first control-valve (36) and,
- a second return line extending from the second control chamber (66) toward the outlet, said second return line being controlled by the second control-valve (34).

5. Dual-fuel injector (14) as claimed in any one of the preceding claims wherein the second circuit (C2) solely comprises a second high pressure line (110) for conveying the second fuel (F2) from the second inlet (18) to the second set of holes (46).

6. Dual-fuel injector (14) as claimed in any one of the preceding claims wherein the first fuel (F1) is a diesel fuel and the second fuel (F2) is compressed natural gas (CNG).

7. Dual-fuel injector (14) as claimed in claim 6 when depending upon claim 5, wherein the second high pressure line comprises of a single volume or several parallel channels (110) merging in a common gallery (112) arranged in the vicinity to the nozzle tip (22), said second high pressure line having an overall volume comprised between 10cm³ and 18 cm³.

8. Dual-fuel injector (14) as claimed in any one of the claims 6 or 7 wherein the first inlet (16) opens in a metallic part and it defines a first female face (104) adapted to receive a complementary male face of a high pressure pipe forming a first metal-to-metal seal when tightened against each other.

9. Dual-fuel injector (14) as claimed in any one of the claims 6 to 8 wherein the second inlet (18) opens in a metallic part and it defines a female face (82) adapted to receive a complementary male face of a high pressure pipe forming a second metal-to-metal seal when tightened against each other.

10. Dual-fuel injection equipment (12) comprising at least one dual-fuel injector (14) as claimed in any one of the preceding claims.

## Patentansprüche

1. Dualkraftstoffinjektor (14), der ausgebildet ist, in einer Dualkraftstoffeinspritzeinrichtung (12) eines Verbrennungsmotors (10) angeordnet zu sein, wobei sich der Dualkraftstoffinjektor (14) im Allgemeinen entlang einer Hauptachse (X) erstreckt, von einem oberen Kopf (20) zu einer Düsenspitze (22), und intern eine erste Schaltung (C1) umfasst zum Fördern eines ersten Kraftstoffs (F1) von einem ersten Einlass (16) zu einem ersten Satz von Einspritzlöchern (44), in der Düsenspitze (22) vorgesehen sind, und eine zweite Schaltung (C2) zum Fördern eines zweiten Kraftstoffs (F2) von einem zweiten Einlass (18) zu einem zweiten Satz von Einspritzlöchern (46), die in der Düsenspitze (22) vorgesehen sind, wobei der Dualkraftstoffinjektor (14) weiter aufweist
- ein erstes Steuerventil (36), das angeordnet ist, um den Druck des ersten Kraftstoffs (F1) in einer ersten Steuerkammer (58) zu steuern, wodurch das Öffnen oder Schließen eines ersten Ventilelements (50) erzwungen wird, das ein Einspritzen des ersten Kraftstoffs (F1) über den ersten Satz von Einspritzlöchern (44) ermöglicht oder verhindert, und
- ein zweites Steuerventil (34), das angeordnet ist, um den Druck des ersten Kraftstoffs (F1) in einer zweiten Steuerkammer (66) zu steuern, wodurch das Öffnen oder Schließen eines zweiten Ventilelements (52) erzwungen wird, das ein Einspritzen des zweiten Kraftstoffs (F2) über den zweiten Satz von Einspritzlöchern (46) ermöglicht oder verhindert, wobei das erste Ventilelement (50) konzentrisch in einer in dem zweiten Ventilelement (52) vorgesehenen Bohrung geführt ist, und wobei
der Injektor (14) weiter aufweist:
einen ersten Einlasskörper (30), der in dem Kopf des Injektors angeordnet ist und sich axial (X) von einer Oberseite (102) zu einer quer verlaufenden Unterseite (100) erstreckt und mit dem ersten Einlass (16) versehen ist, wobei die Unterseite des ersten Einlasskörpers in Oberflächenkontakt mit dem zweiten Steuerventil ist, und
einen zweiten Einlasskörper (38), der sich axial (X) von einer quer verlaufenden Oberseite (74) zu einer gegenüberliegenden quer verlaufenden Unterseite (72) erstreckt, wobei das erste Steuerventil in einer Aussparung (80) angeordnet ist, die in der Oberseite (74) des zweiten Einlasskörpers vorgesehen ist, und
eine erste Hutmutter (24), die auf einer Schulterfläche des ersten Einlasskörpers (30) aufliegt und fest an dem zweiten Einlasskörper (38) angezogen ist, wodurch die zwei zwischen den zwei Einlasskörpern zusammengedrückten Steuerventile in axialer Ausrichtung fixiert sind, und
ein Zylinderelement (40) und eine Düsenanordnung (42), wobei die Oberseite (62) des Zylinderelements (40) in Oberflächenkontakt mit der Unterseite (72) des zweiten Einlasskörpers ist und die Unterseite (60) des Zylinderelements (40) in Oberflächenkontakt mit der Oberseite der Düsenanordnung (42) ist, und wobei die zweite Steuerkammer (66) in dem Zylinderelement (40) definiert ist.

2. Dualkraftstoffinjektor (14) gemäß Anspruch 1, wobei das erste und das zweite Ventilelement (50, 52) in der Düsenanordnung (42) axial geführt sind und die erste Steuerkammer (58) in der Düsenanordnung (42) definiert ist.

3. Dualkraftstoffinjektor (14) gemäß einem der Ansprüche 1 oder 2, der weiter eine zweite Hutmutter (26) aufweist, die auf einer Schulterfläche der Düsenanordnung (42) aufliegt und fest an dem zweiten Einlasskörper (38) angezogen ist, wodurch das zwischen der Düsenanordnung (42) und dem zweiten Einlasskörper (38) zusammengedrückte Zylinderelement (40) in axialer Ausrichtung fixiert ist.

4. Dualkraftstoffinjektor (14) gemäß einem der vorhergehenden Ansprüche, wobei die erste Schaltung (C1), die zum Fördern des ersten Kraftstoffs (F1) vorgesehen ist, aufweist:
- eine erste Hochdruckleitung, die sich von dem ersten Einlass (16) zu dem ersten Satz von Löchern (44) erstreckt,
- eine erste Verzweigung, die sich von der ersten Hochdruckleitung zu der ersten Steuerkammer (58) erstreckt, und
- eine zweite Verzweigung, die sich von der ersten Hochdruckleitung zu der zweiten Steuerkammer (66) erstreckt, und wobei
die erste Schaltung (C1) weiter aufweist:
- eine erste Rücklaufleitung, die sich von der ersten Steuerkammer (58) in Richtung eines Auslasses erstreckt, wobei die erste Rücklaufleitung durch das erste Steuerventil (36) gesteuert wird, und
- eine zweite Rücklaufleitung, die sich von der zweiten Steuerkammer (66) in Richtung des Auslasses erstreckt, wobei die zweite Rücklaufleitung durch das zweite Steuerventil (34) gesteuert wird.

5. Dualkraftstoffinjektor (14) gemäß einem der vorhergehenden Ansprüche, wobei die zweite Schaltung (C2) einzig eine zweite Hochdruckleitung (110) zum Fördern des zweiten Kraftstoffs (F2) von dem zweiten Einlass (18) zu dem zweiten Satz von Löchern (46) aufweist.

6. Dualkraftstoffinjektor (14) gemäß einem der vorhergehenden Ansprüche, wobei der erste Kraftstoff (F1) ein Dieselkraftstoff ist und der zweite Kraftstoff (F2) komprimiertes Erdgas (CNG - compressed natural gas) ist.

7. Dualkraftstoffinjektor (14) gemäß Anspruch 6, wenn abhängig von Anspruch 5, wobei die zweite Hochdruckleitung aus einem einzelnen Volumen oder mehreren parallelen Kanälen (110) besteht, die in eine gemeinsame Galerie (112) münden, die in der Nähe der Düsenspitze (22) angeordnet ist, wobei die zweite Hochdruckleitung ein Gesamtvolumen zwischen 10 cm³ und 18 cm³ hat.

8. Dualkraftstoffinjektor (14) gemäß einem der Ansprüche 6 oder 7, wobei der erste Einlass (16) in einem metallischen Teil mündet und eine erste weibliche Fläche (104) definiert, die ausgebildet ist zur Aufnahme einer komplementären männlichen Fläche eines Hochdruckrohrs, die eine erste Metall-auf-Metall-Dichtung bilden, wenn aneinander festgezogen.

9. Dualkraftstoffinjektor (14) gemäß einem der Ansprüche 6 bis 8, wobei der zweite Einlass (18) in einem Metallteil mündet und eine weibliche Fläche (82) definiert, die ausgebildet ist zur Aufnahme einer komplementären männlichen Fläche eines Hochdruckrohrs, die eine zweite Metall-auf-Metall-Dichtung bilden, wenn aneinander festgezogen.

10. Dualkraftstoffeinspritzeinrichtung (12) mit zumindest einem Dualkraftstoffinjektor (14) gemäß einem der vorhergehenden Ansprüche.

## Revendications

1. Injecteur à deux carburants (14) adapté pour être agencé dans un équipement d'injection à deux carburants (12) d'un moteur à combustion interne (10), ledit injecteur à deux carburants (14) s'étendant généralement le long d'un axe principal (X), depuis une tête supérieure (20) jusqu'à un embout de gicleur (22), et logeant de façon interne un premier circuit (C1) pour transporter un premier carburant (F1) depuis une première entrée (16) jusqu'à un premier jeu de trous d'injection (44) prévus dans l'embout de gicleur (22) et, un second circuit (C2) pour transporter un second carburant (F2) depuis une seconde entrée (18) jusqu'à un second jeu de trous d'injection (46) prévus dans l'embout de gicleur (22), l'injecteur à deux carburants (14) comprenant en outre
- une première soupape de commande (36) agencée pour commander la pression du premier carburant (F1) dans une première chambre de commande (58), ainsi forçant l'ouverture, ou la fermeture, d'un premier organe de soupape (50) permettant, ou interdisant, l'injection du premier carburant (F1) par l'intermédiaire du premier jeu de trous d'injection (44) et,
- une seconde soupape de commande (34) agencée pour commander la pression du premier carburant (F1) dans une seconde chambre de commande (66), ainsi forçant l'ouverture, ou la fermeture, d'un second organe de soupape (52) permettant, ou interdisant, l'injection du second carburant (F2) par l'intermédiaire du second jeu de trous d'injection (46), le premier organe de soupape (50) étant concentriquement guidé dans un alésage prévu à l'intérieur du second organe de soupape (52), et dans lequel
l'injecteur (14) comprend en outre:
un premier corps d'entrée (30) agencé dans la tête de l'injecteur et s'étendant axialement (X) depuis une face supérieure (102) jusqu'à une sous-face transversale (100), et étant pourvu de la première entrée (16), la sous-face du premier corps d'entrée étant en contact de surface contre la seconde soupape de commande, et
un second corps d'entrée (38) s'étendant axialement (X) depuis une face supérieure transversale (74) jusqu'à une sous-face transversale opposée (72), la première soupape de commande étant agencée dans un évidement (80) prévu dans ladite face supérieure (74) du second corps d'entrée et,
un premier écrou borgne (24) prenant appui sur une face d'épaulement du premier corps d'entrée (30) et étant fermement resserré sur le second corps d'entrée (38), ainsi fixant en co-alignement axial les deux soupapes de commande comprimées entre les deux corps d'entrée et,
un élément cylindrique (40) et un ensemble à gicleur (42), la face supérieure (62) de l'élément cylindrique (40) étant en contact de surface contre la sous-face (72) du second corps d'entrée, et la sous-face (60) ou ledit élément cylindrique (40) étant en contact de surface contre la face supérieure de l'ensemble à gicleur (42) et dans lequel la seconde chambre de commande (66) est définie dans ledit élément cylindrique (40).

2. Injecteur à deux carburants (14) selon la revendication 1, dans lequel les premier et second organes de soupape (50, 52) sont axialement guidés dans l'ensemble à gicleur (42) et la première chambre de commande (58) est définie dans ledit ensemble à gicleur (42).

3. Injecteur à deux carburants (14) selon l'une quelconque des revendications 1 ou 2, comprenant en outre un second écrou borgne (26) prenant appui sur une face d'épaulement de l'ensemble à gicleur (42) et étant fermement resserré sur le second corps d'entrée (38) ainsi fixant en co-alignement axial l'élément cylindrique (40) comprimé entre l'ensemble à gicleur (42) et le second corps d'entrée (38).

4. Injecteur à deux carburants (14) selon l'une quelconque des revendications précédentes, dans lequel le premier circuit (C1) prévu pour transporter le premier carburant (F1) comprend:
- une première conduite à haute pression s'étendant depuis la première entrée (16) jusqu'au premier jeu de trous (44),
- une première branche s'étendant depuis ladite première conduite à haute pression jusqu'à la première chambre de commande (58) et,
- une seconde branche s'étendant depuis ladite première conduite à haute pression jusqu'à la seconde chambre de commande (66) et dans lequel,
ledit premier circuit (C1) comprend en outre :
- une première conduite de retour s'étendant depuis la première chambre de commande (58) vers une sortie, ladite première conduite de retour étant commandée par la première soupape de commande (36) et,
- une seconde conduite de retour s'étendant depuis la seconde chambre de commande (66) vers la sortie, ladite seconde conduite de retour étant commandée par la seconde soupape de commande (34).

5. Injecteur à deux carburants (14) selon l'une quelconque des revendications précédentes, dans lequel le second circuit (C2) comprend seulement une seconde conduite à haute pression (110) pour transporter le second carburant (F2) depuis la seconde entrée (18) jusqu'au second jeu de trous (46).

6. Injecteur à deux carburants (14) selon l'une quelconque des revendications précédentes, dans lequel le premier carburant (F1) est un carburant diesel et le second carburant (F2) est un gaz naturel comprimé (CNG).

7. Injecteur à deux carburants (14) selon la revendication 6 lorsqu'elle dépend de la revendication 5, dans lequel la seconde conduite à haute pression est composée d'un seul volume ou de plusieurs canaux parallèles (110) se rejoignant en une canalisation commune (112) agencée dans le voisinage de l'embout de gicleur (22), ladite seconde conduite à haute pression ayant un volume total compris entre 10 cm³ et 18 cm³.

8. Injecteur à deux carburants (14) selon l'une quelconque des revendications 6 ou 7, dans lequel la première entrée (16) s'ouvre dans une partie métallique et elle définit une première face femelle (104) adaptée pour recevoir une face mâle complémentaire d'un tuyau à haute pression, formant un premier élément d'étanchéité métal sur métal lorsqu'elles sont resserrées l'une contre l'autre.

9. Injecteur à deux carburants (14) selon l'une quelconque des revendications 6 à 8, dans lequel la seconde entrée (18) s'ouvre dans une partie métallique et elle définit une face femelle (82) adaptée pour recevoir une face mâle complémentaire d'un tuyau à haute pression, formant un second élément d'étanchéité métal sur métal lorsqu'elles sont resserrées l'une contre l'autre.

10. Équipement d'injection à deux carburants (12), comprenant au moins un injecteur à deux carburants (14) selon l'une quelconque des revendications précédentes.
